# EUROPEAN PATENT APPLICATION

(11) **EP 1 942 016 A1**
(43) Date of publication of application: **09.07.2008**
(21) Application number: 06822115.9
(22) Date of filing: 24.10.2006
(51) Int. Cl.: B60C 17/01

(54) **AIR BLADDER FOR SAFETY TIRE AND SAFETY TIRE**

(30) Priority: 25.10.2005 JP 2005310152
(71) Applicant: Bridgestone Corporation, Tokyo 104-8340 (JP)
(72) Inventor: MATSUZAWA, Kazutaka, Kodaira-shi, Tokyo 1878531 (JP)
(74) Representative: Whalley, Kevin
(86) International application number: PCT/JP2006/321135
(87) International publication number: WO 2007/049601

(57) **Abstract**

As to an air bladder having a laminate structure of an inner layer and an outer layer, there is provided a method wherein an air tightness in a joint portion of the inner layer is kept surely and a joint distance between the inner layer and the outer layer is properly configured.

A hollow toric-shaped air bladder for a safety tire placed in a tire and filled with a gas and supporting a load applied to the tire by expansion-deformation based on dropping of a tire internal pressure,
which has a laminate structure of an inner layer formed by rounding an innerliner member in a toric form and overlapping end portions of the innerliner member with each other at a side of an outer diameter of the toric, and an outer layer comprised of a main reinforcement member covering an outer peripheral face of the inner layer other than the overlapped portion of the innerliner member and a sub reinforcement member covering the overlapped portion including ends of the main reinforcement member.

## Description

### TECHNICAL FIELD

This invention relates to an air bladder for a safety tire which is used in a safety tire capable of continuing safe running over a predetermined distance even if a tire internal pressure is dropped or lost by tire puncture or the like and expansion-deformed based on the dropping of the tire internal pressure or the like to support a load applied to the tire.

### RELATED ART

There have hitherto been proposed various kinds of tires as a safety tire capable of continuously and safely running to a place provided with an equipment capable of replacing or repairing the tire even when the puncture of the tire, damage of an air valve or the like is caused to drop or lose the tire internal pressure.
Especially, as the safety tire there is a combination of a tire comprising a tread portion, a pair of sidewall portions and a pair of bead portions and an air bladder of a hollow toric form as a while placed in the tire and filled with an internal pressure subrogate the support of a load by expansion-deformation based on the dropping of the tire internal pressure as disclosed in, for example, Patent Documents 1 and 2.

The former safety tire is provided with two layers of crossed-cord layers, similar to a belt of a tire, around the outer periphery of the air bladder as a reinforcement member for a restriction. The air bladder received in the tire is inflated at a pressure 50~500kPa higher than that of the tire. When the tire gets punctured, the expansion force of the air bladder breaks the cord of the reinforcement member and the expanded air bladder supports the load instead of tire. The latter is a double-tire structure, in which an outer tire and a toric membrane (air bladder) received in the outer tire are mounted together to a rim, the toric membrane being similar to a radial tire structure. The air bladder, which comprises a turndown reinforcement ply, is provided with plural of reinforcement ring elements (cord) along the outer periphery arranged with a space between one another in the width direction. When the tire gets punctured, the expansion force of the air bladder breaks the turndown ply and reinforcement ring elements and the air bladder supports the load instead of tire.

Such a safety tire in which a cord breaks inside of an air bladder has a possibility that an end of the cord may scratch and break the air bladder itself to lose the function of the safety tire. Moreover such a safety tire in which a cord breaks outside of the air bladder has a high possibility that the broken cord may scratch and break the outer surface of the air bladder and the inner surface of the tire including the carcass. Therefore it is difficult for both types of the safety tires to achieve the safe running distance long enough for the safety tire after the tire puncture.

Patent Document 3 describes a safety tire which avoids the above-mentioned problems happening if the cord breaks as a whole, by forming the turndown reinforcement ply disposed on the air bladder from a cord comprising a core wire and a winding wire wound around the core wire spirally. The cord bears the centrifugal force and inner pressure difference during the normal running. When the air is lost for some reason including the tire puncture, the winding wire extends without breaking while the core wire breaks. Moreover, the winding wire is provided with a sufficient periphery required for expanding/deforming.

But in this safety tire it is not ensured that the core wire of the cord, as a tension supporting member, breaks at the right time thoroughly around the whole periphery and the whole width of the air bladder. Furthermore, when the winding wire is about to support the expansion force of the air bladder after the core wire breaks, the air bladder is expanded/deformed while acted by the small tensile force, or tensile stress, which makes it difficult to contact the air bladder thoroughly to the inner surface of the air bladder.
Patent Document 1: WO98/23457
Patent Document 2: WO99/32308
Patent Document 3: WO00/30877

### DISCLOSURE OF THE INVENTION

### PROBLEMS TO BE SOLVED BY THE INVENTION

The inventor has developed an air bladder having a laminated structure of an inner layer having a high airtightness and a reinforcement layer covering an outer peripheral face of the inner layer. The reinforcement layer is a composite of rubber and nonwoven fabric, which contributes to bring about the uniform expansion when the tire internal pressure is dropped at the puncture to expansion-deform the air bladder.

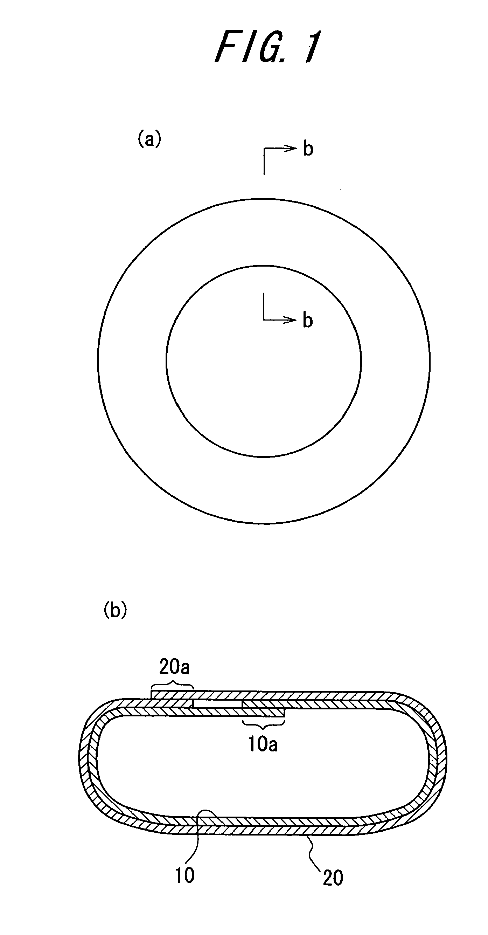

The air bladder developed herein is manufactured by laminating sheets constituting the inner layer and the outer layer one upon the other. That is, a widthwise section view of a toric air bladder shown in FIG. 1a is shown in FIG. 1b, wherein an inner layer 10 is normally formed by rounding an air-impermeable innerliner member in a toric form and overlapping end portions of the innerliner member at a side of an outer diameter of the toric, and further a composite of rubber and nonwoven fabric is rounded in a toric form at the outisde thereof and end portions of the composite are overlapped at a side of an outer diameter of the toric to prepare an outer layer 20.

For the overlapped portions of the innerliner member and the composite, so-called joint portions 10a and 20a, the joint portion 20a has to be bonded after the joint portion 10a is bonded. For this end, the joint portions 10a and 20a are arranged separately in the widthwise direction in order to avoid an overlap in the radial direction.

Therefore, in this manner in which the composite forming the outer layer 20 is applied outside the inner layer 10, the bonded state of the joint portion 10a of the inner layer 10 can not be checked by seeing, which makes it difficult to ensure the bonding of the joint portion 10a. If the bonding of the joint portion 10a is incomplete, during inflation process inflating the inner pressure before vulcanization/molding process, or vulcanization/molding process after bonding the inner layer 10 and the outer layer 20, the inner pressure falls from air leak, which results the high production rate of defective pieces.

Furthermore, since the outer layer is provided to cover the inner layer, it is difficult to adjust a relative position of the joint portions 10a and 20b. If the gap between the joint portions 10a and 20a is small, this small gap portion is extended during inflation or vulcanization/molding process, which causes a uniformity of thickness in products after vulcanization. Some products can not provide the required performance as a product.

The object of the invention is to solve problems which the above-mentioned conventional techniques hold and to provide a safety tire of a laminate structure of an inner layer and an outer layer such that an air tightness of a joint portion, especially the joint portion of the inner layer, is ensured and a distance between the joint portions of the inner layer and outer layer is properly adjusted.

### MEANS FOR SOLVING PROBLEMS

The summary of the invention is as follows.
(1) A hollow toric-shaped air bladder for a safety tire placed in a tire and filled with a gas and supporting a load applied to the tire by expansion-deformation based on dropping of a tire internal pressure, having a laminate structure of an inner layer formed by rounding an innerliner member in a toric form and overlapping end portions of the innerliner member with each other at a side of an outer diameter of the toric, and an outer layer comprised of a main reinforcement member covering an outer peripheral face of the inner layer other than the overlapped portion of the innerliner member and a sub reinforcement member covering the overlapped portion including ends of the main reinforcement member.

(2) A hollow toric-shaped air bladder for a safety tire placed in a tire and filled with a gas and supporting a load applied to the tire by expansion-deformation based on dropping of a tire internal pressure, having a laminate structure of an inner layer formed by rounding an innerliner member in a toric form and overlapping end portions of the innerliner member with each other at a side of an outer diameter of the toric, and an outer layer comprised of a main reinforcement member covering an outer peripheral face of the inner layer other than the overlapped portion of the innerliner member and a sub reinforcement member covering the overlapped portion including ends of the main reinforcement member, and further providing a tension supporting layer outside the sub reinforcement member.

(3) An air bladder for a safety tire according to item (1) or (2), wherein a joint distance between a side edge of the overlapped portion of the innerliner member and a side edge of an overlapped portion of an end portion of the main reinforcement member with the sub reinforcement member is not less than 80% of either wider width of these overlapped portions.

(4) An air bladder for a safety tire according to item (1), (2) or (3), wherein a joint distance in one side of the overlapped portion of the innerliner member is not more than 150% of a joint distance in the other side thereof.

(5) A safety tire characterized by placing an air bladder as described in any one of items (1) to (4) in an interior of a tire.

### EFFECT OF THE INVENTION

According to the invention, the joint portion, especially the joint portion of the inner layer has a good air tightness and the distance between the joint portions of the inner layer and the outer layer is proper, which achieves the normal vulcanization/molding and the good quality to have a uniform thickness.

### BRIEF DESCRIPTION OF THE DRAWINGS

FIG. 1 is a view showing an external shape and a structure of the conventional air bladder.
FIG. 2 is a cross sectional view of a safety tire in which an air bladder is arranged.
FIG. 3 is a view showing a structure of an air bladder according to the invention.
FIG. 4 is a view showing a structure of another air bladder according to the invention.

### DESCRIPTION OF REFERENCE SYMBOLS

- 1: safety tire
- 2: tire
- 3: air bladder
- 4: tread portion
- 5: sidewall portion
- 6: bead portion
- 7: inner layer
- 8: outer layer
- 9: tension supporting member
- 70: innerliner member
- 80: main reinforcement member
- 81: sub reinforcement member
- 70a, 80a, 80b: joint portion

### BEST MODE FOR CARRYING OUT THE INVENTION

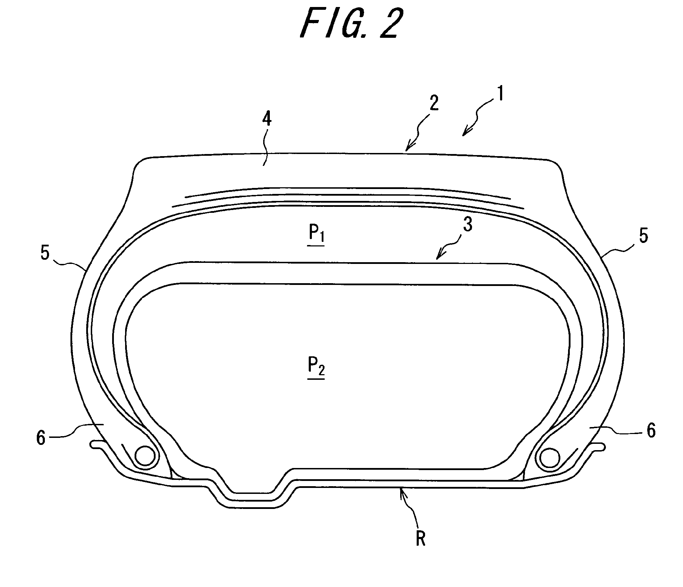

FIG. 2 is a cross sectional view of an air bladder according to the invention at a state of assembling in a safety tire-rim assembly. 1 shows a whole of a safety tire. The safety tire 1 is a combination of a tire 2 mounted on a rim R and an air bladder 3 placed therein.
The tire 2 is the same as in the general pneumatic tire and comprises a tread portion 4, sidewall portions 5 connecting to both sides thereof, and a bead portion 6 disposed an an inner peripheral side of the sidewall portion 5.

The air bladder 3, which forms a hollow toric form as a whole shown in FIG. 1 (a), support the load by expansion-deformation based on the dropping or losing of the inner pressure in the tire 2.

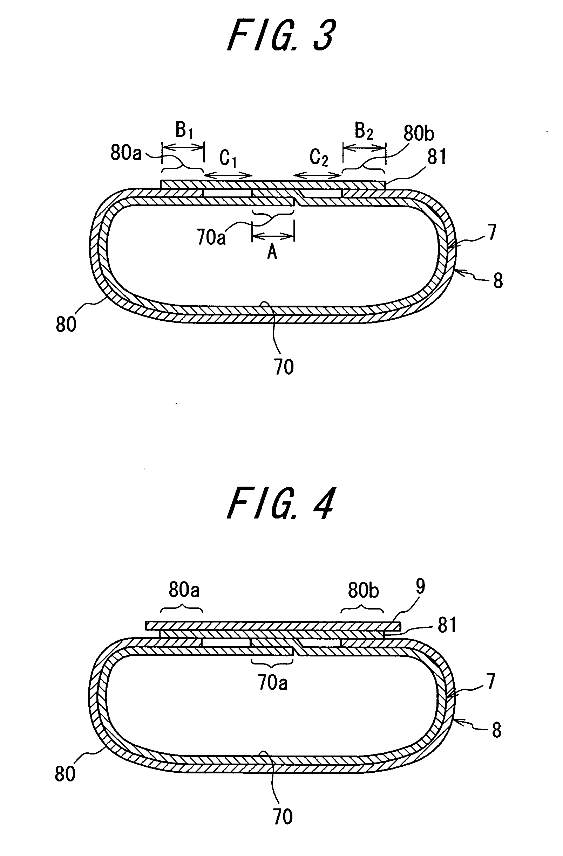

The air bladder 3 is a laminate structure of an inner layer 7 and an outer layer 8 as shown by a section in FIG. 3. The inner layer 7 is formed by rounding an air-impermeable innerliner member 70 in a toric form and overlapping end portions of the innerliner member 70 to form a joint portion 70a in a widthwise central part at a side of an outer diameter of the toric.

Further, the outer layer 8 covering the outside of the inner layer 7 comprises a main reinforcement member 80 and a sub reinforcement member 81. The main reinforcement member 80 is formed by rounding a composite of rubber and nonwoven fabric in a toric form along the inner layer 7 other than the joint portion 70a. The sub reinforcement member 81 covers the joint portion 70a including the end portion of the main reinforcement member 80. Therefore, two joint portions 80a and 80b are formed by overlapping the main reinforcement member 80 and sub reinforcement member 81.

The air bladder 3 forms the laminate structure as described above, which enables to check the bonded state of the joint portion 70a again when the main reinforcement member 80 of the outer layer 8 is mounted on the inner layer 70. As a result, the joint portion 70a is surely bonded. Moreover, the sub reinforcement member 81 is applied to the joint portion 70a afterward and the joint portions 80a and 80b are arranged in the place certainly away from the joint portion 70a, which avoids the excessive concentration of the joint portions as seen in conventional techniques.

It is advantageous that joint distances C₁ and C₂ among a side edge of the joint portion 70a of the innerliner member 70, an end portion of the main reinforcement member 80 and each side edge of joint portions 80a and 80b of the sub reinforcement member 81 are not less than 80% of either wider width in widths A, B₁ and B₂ of the joint portions 70a, 80a, 80b. Because, portions between joints (portions indicated as the distances C₁ and C₂) being less in the rigidity are extended during the inflation or vulcanization, and hence the possibility of making the product thickness non-uniform increases.

Moreover, for the same reason, it is preferred that either joint distance C₁ or C₂ is not more than 150% of the other joint distance C₁ or C₂.

A face of the outer diameter of the air bladder, which is the sub reinforcement member 81 in the drawing, has to restrict the expansion of the air bladder during normal running by making the surface of a tension supporting member. In this case, the sub reinforcement member 81 may be a composite of rubber and nonwoven fabric, in which polyethylene terephthalate fibers are arranged in the circumference direction of the air bladder.

Alternatively, the sub reinforcement member 81 is not used as the tension supporting member and made of the composite of rubber and nonwoven fabric same as the main reinforcement member 80. In this case, it is preferable that the tension supporting member 9 made of the composite of aramid fibers and nonwoven fabric should be provided such that it covers the sub reinforcement member 81.

The safety tire 1 can be used as a rim assembly by assembling the tire 2 onto an approved rim R and filling a predetermined internal pressure P₁, for example a maximum air pressure as described in LATMA YEAR BOOK or the like into an interior of the tire through a valve fixed thereto and simultaneously filling a predetermined internal pressure P₂ into the air bladder. The material used for filling the internal pressure may be an inert gas or other gas in addition to air.
In this case, the outer diameter of the air bladder 3 is made smaller than an outer diameter of an inner peripheral face of the tread, and also the internal pressure P₂ of the air bladder is usually equal to or more than the tire internal pressure P₁.

When the rim assembly is rotated under loading with the predetermined internal pressure P₁, a crown region of the air bladder 3 in the contact area of the tread portion 4 perform as the tension supporting member, or as a radial expansion restrict member to bear the force produced by the centrifugal force and inner pressure difference, the crown region being placed away from the tread inner periphery.

When the pressure difference between the inside and outside of the air bladder 3 exceeds the predetermined value, for example when the tire internal pressure falls to the atmosphere pressure, the expansion portion of the air bladder 3 other than the radial expansion suppress member expands/deforms such that the air bladder contacts thoroughly close to the whole inner surface of the tire 2 to support the load instead of the tire 2. Therefore, under the action of the air bladder 3, continuous safe running is achieved even when the tire 2 is punctured.

### EXAMPLES

An air bladder having a structure as shown in FIGS. 1 to 3 is prepared under conditions shown in Table. 1. The thickness of the resulting product is measured to examine a thickness of a thinnest portion.
Also, air tightness as the air bladder is examined. That is, a retention of the internal pressure is measured after the filling of the predetermined internal pressure.

The above measured and evaluated results are shown in Table 2 by an index on the basis that the result of the conventional air bladder (conventional example) is 100.

**[Table 1]**

| (mm) | | | | | | |
|---|---|---|---|---|---|---|
| | Structure | A | B₁ | B₂ | C₁ | C₂ |
| Conventional Example | FIG. 1(b) | 20(*1) | 20(*2) | - | 20(*3) | - |
| Invention Example 1 | FIG. 3 | 20 | 25 | 25 | 15 | 65 |
| Invention Example 2 | FIG. 3 | 20 | 25 | 25 | 40 | 40 |
| Invention Example 3 | FIG. 3 | 20 | 25 | 25 | 30 | 50 |

| | | | | | | |
|---|---|---|---|---|---|---|
| *1: width of joint portion 10a *2: width of joint portion 20a *3: distance between joint portions 10a and 20a | | | | | | |

**[Table 2]**

| | Air tightness | Thickness of thinnest portion |
|---|---|---|
| Conventional Example | 100 | 1.0 mm |
| Invention Example 1 | 120 | 1.5 mm |
| Invention Example 2 | 150 | 2.5 mm |
| Invention Example 3 | 140 | 2.0 mm |

## Claims

1. A hollow toric-shaped air bladder for a safety tire placed in a tire and filled with a gas and supporting a load applied to the tire by expansion-deformation based on dropping of a tire internal pressure, having a laminate structure of an inner layer formed by rounding an innerliner member in a toric form and overlapping end portions of the innerliner member with each other at a side of an outer diameter of the toric, and an outer layer comprised of a main reinforcement member covering an outer peripheral face of the inner layer other than the overlapped portion of the innerliner member and a sub reinforcement member covering the overlapped portion including ends of the main reinforcement member.

2. A hollow toric-shaped air bladder for a safety tire placed in a tire and filled with a gas and supporting a load applied to the tire by expansion-deformation based on dropping of a tire internal pressure, having a laminate structure of an inner layer formed by rounding an innerliner member in a toric form and overlapping end portions of the innerliner member with each other at a side of an outer diameter of the toric, and an outer layer comprised of a main reinforcement member covering an outer peripheral face of the inner layer other than the overlapped portion of the innerliner member and a sub reinforcement member covering the overlapped portion including ends of the main reinforcement member, and further providing a tension supporting layer outside the sub reinforcement member.

3. An air bladder for a safety tire according to claim 1 or 2, wherein a joint distance between a side edge of the overlapped portion of the innerliner member and a side edge of an overlapped portion of an end portion of the main reinforcement member with the sub reinforcement member is not less than 80% of either wider width of these overlapped portions.

4. An air bladder for a safety tire according to claim 1, 2 or 3, wherein a joint distance in one side of the overlapped portion of the innerliner member is not more than 150% of a joint distance in the other side thereof.

5. A safety tire **characterized by** placing an air bladder as claimed in any one of claims 1 to 4 in an interior of a tire.
